Europäisches Patentamt

European Patent Office

Office européen des brevets

(11) Numéro de publication: **0 206 896**
A1

# DEMANDE DE BREVET EUROPEEN

(21) Numéro de dépôt: **86401222.4**

(22) Date de dépôt: **06.06.86**

(51) Int. Cl.⁴: **H 02 G 3/06, F 16 L 5/02**

(30) Priorité: **17.06.85 FR 8509132**
**29.11.85 FR 8517652**

(43) Date de publication de la demande: **30.12.86**
**Bulletin 86/52**

(84) Etats contractants désignés: **AT BE CH DE FR GB IT LI LU NL**

(71) Demandeur: **CAPRI-CODEC S.A.:Société anonyme dite, 24 à 32 rue Ernest Renan, F-92707 Colombes Cédex (FR)**

(72) Inventeur: **de Vienne, Robert, 8 Bis rue Laurent Pichat, F-75016 Paris (FR)**

(74) Mandataire: **Clisci, Serge et al, S.A. FEDIT-LORIOT CONSEILS EN PROPRIETE INDUSTRIELLE 38, avenue Hoche, F-75008 Paris (FR)**

(54) Presse-étoupe modulaire et adaptable à la traversée d'une paroi par une canalisation cylindrique.

(57)  Presse-étoupe modulaire (1) pour le maintien d'une canalisation électrique (12), d'un tube, d'un câble, d'une tige, ou analogue, traversant une paroi (2), qui comprend un corps tubulaire (3) renfermant une garniture compressible (4) pressée par un organe annulaire de compression (5), caractérisé en ce que le corps (3) présente des moyens d'assujettissement (6, 7) à une pluralité d'organes complémentaires interchangeables (8, 9, 10, 11, 15) pour le maintien du presse-étoupe (1) sur la paroi (2), et/ou le maintien de la canalisation (12).

PRESSE-ETOUPE MODULAIRE ET ADAPTABLE A LA TRAVERSEE
D'UNE PAROI PAR UNE CANALISATION CYLINDRIQUE

La présente invention concerne les presse-étoupe pour maintenir une canalisation électrique, un tube, un câble ou une tige traversant une paroi tout en assurant l'étanchéité de part et d'autre de la paroi.

On connaît de nombreuses variétés de presse-étoupe qui comportent toutes un corps tubulaire renfermant une garniture compressible, à l'origine de l'étoupe, mais plus fréquemment en caoutchouc ou autre matériau élastomère, voire en plomb ou en graphite.

La garniture est comprimée à l'aide d'un écrou ou d'une vis annulaire.

La fixation du presse-étoupe s'effectue le plus souvent à l'aide d'un écrou que l'on vient adapter à l'extrémité filetée du corps du presse-étoupe, de l'autre côté de la paroi traversée, ce qui nécessite l'accès à l'autre face de la paroi.

Par ailleurs, la compression de la garniture s'effectue généralement vers le milieu du corps du presse-étoupe et la capacité de déformation de la garniture est limitée et ne permet le serrage que de canalisations de diamètres peu différents pour un presse-étoupe donné, avec souvent un effort de torsion excessif sur la gaine entourant le câble, ou autre canalisation, pouvant amener la détérioration de cette gaine lors du blocage.

L'invention a pour but de pallier les inconvénients des presse-étoupe classiques, et notamment de permettre la réalisation de presse-étoupe pour diverses applications à partir d'un nombre de pièces standardisées réduit.

L'invention a pour objet un presse-étoupe modulaire pour maintenir et assurer l'étanchéité autour d'une canalisation électrique d'un tube, d'un câble, d'une tige, ou analogue à la traversée d'une paroi, qui comprend un corps tubulaire renfermant une garniture compressible pressée par un organe annulaire de compression, caractérisé en ce que le corps présente des moyens d'assujettissement à une pluralité d'organes complémentaires interchangeables pour le maintien du presse-étoupe sur la paroi, et/ou le maintien de la canalisation.

Le corps peut ainsi présenter à son extrémité traversant la paroi, un épaulement annulaire de butée limitant un filetage qui peut coopérer à volonté, pour la fixation du presse-étoupe sur la paroi avec un filetage de la paroi, un écrou de blocage sur la face de la paroi opposée à celle sur laquelle bute l'épaulement, un réducteur ou un amplificateur de diamètre du filetage, une douille intermédiaire solidarisable de la paroi.

Dans un mode de réalisation, l'organe annulaire de compression de la garniture peut être constitué par un écrou annulaire vissant sur l'extrémité du corps opposée aux moyens d'assujettissement à la paroi pour comprimer une garniture contre un épaulement interne du corps, caractérisé en ce que l'écrou présente à son extrémité opposée au corps des moyens d'assujettissement par vissage, encliquetage, sertissage, ou soudure, à des organes complémentaires interchangeables de serrage, d'ancrage, ou de guidage d'une canalisation à travers le presse-étoupe.

Au moins un des organes complémentaires interchangeables peut comporter des moyens d'assujettissement à au moins un autre organe complémentaire interchangeable.

Dans un mode de réalisation pratique, l'écrou est prolongé par un rétrécissement tronconique galbé semi-torique, contre lequel est pressée une garniture en butée sur un épaulement de l'extrémité du corps, ainsi soumise à un fluage centripète assurant son serrage sur des canalisations d'une large gamme de diamètres.

La garniture est avantageusement en élastomère et a, en l'absence de compression, une forme bi-tronconique extérieure en regard du rétrécissement prolongeant l'écrou, et un alésage intérieur cylindrique.

Suivant une variante, la garniture d'étanchéité est logée dans l'organe de compression constitué par un chapeau vissant sur le corps et prend appui, d'une part sur la tranche d'extrémité du corps et, d'autre part, sur une bague solidaire axialement du chapeau mais libre en rotation.

On obtient de bons résultats lorsque l'alésage de la bague s'épanouit en direction de la garniture qui présente un chanfrein périphérique extérieur en regard du bord épanoui de la bague.

Dans un mode de réalisation avantageux, la bague est prolongée par un filetage annulaire faisant saillie axialement à travers le chapeau, pour la fixation d'un organe auxiliaire de maintien radial et de guidage de la canalisation, ou d'un opercule axial temporaire, protecteur du filetage.

Par ailleurs, pour la fixation en aveugle, il est avantageux que le filetage du corps coopère avec un taraudage d'une bague de serrage libre axialement mais calée en rotation à l'intérieur d'une pince annulaire élastique multibranches, insérable dans un orifice circulaire de la paroi avec un faible jeu, et comportant des moyens d'appui sur la paroi du côté du presse-étoupe, le vissage du corps dans la bague de serrage attirant la bague vers le corps en écartant les branches de la pince de l'autre côté de la paroi.

La bague de serrage, intérieurement taraudée, peut présenter extérieurement une convexité cylindrique complémentaire d'une concavité intérieure des branches de la pince, avec un éventuel ergot faisant saillie radialement entre deux branches de la pince.

Pour permettre la fixation du presse-étoupe à travers un orifice de paroi accessible d'un seul côté, le presse-étoupe est avantageusement associé à une douille de fixation constituée par une bague annulaire taraudée, limitée d'un côté par une collerette annulaire de butée sur la face accessible de la paroi, et prolongée à l'opposé par une partie extérieurement bi conique renflée dans sa partie médiane traversant la paroi, et découpée par plusieurs fentes longitudinales en une pluralité de doigts radiaux formant une pince compressible lors de l'insertion de la pince à travers la paroi, et expansible lors du vissage du filetage du corps du presse-étoupe dans le taraudage de la bague.

Une telle douille peut être moulée d'une seule pièce en matière plastique non rigide, au moins une des faces latérales de la collerette présentant au moins une nervure annulaire coaxiale d'étanchéité compressible contre la paroi, ou l'épaulement annulaire de butée du corps du presse-étoupe, réciproquement.

Cette bague peut comporter une membrane d'obturation axiale temporaire, à laquelle elle est raccordée par une zone circulaire frangible, qui constitue un opercule frangible venu de moulage en bout du filetage de la bague, et qui se détache en fin de vissage du corps du presse-étoupe dans la bague.

Un presse-étoupe suivant l'invention prééquipé d'une telle douille, mais vissée partiellement de façon à assurer le maintien de la douille sur l'extrémité du corps, mais sans rupture ni détachement de l'opercule jusqu'à la mise en place par introduction de la douille dans un orifice d'une paroi et vissage à fond du corps dans la bague.

Pour permettre un montage rapide le corps et le chapeau présentent extérieurement des moyens de préhension par un outil de blocage par vissage, et le chapeau présente extérieurement, en plus, des moyens de préhension manuelle pour un vissage rapide préliminaire au blocage.

L'invention sera mieux comprise à la lecture de la description détaillée qui va suivre et à l'examen des dessins annexés qui représentent, à titre d'exemples non limitatifs plusieurs modes de réalisation et variantes de l'invention.

Sur ces dessins,

- la figure 1 est une vue schématique, en élévation et demi-coupe diamétrale, d'un premier mode de réalisation d'un presse-étoupe suivant l'invention avant mise en place;

- la figure 2 est une vue du presse-étoupe de la figure 1 mis en place à travers une paroi et maintenant une canalisation;

- les figures 3 et 4, 5 et 6, 7 et 8, 9 et 10 sont respectivement des vues, analogues à celles des figures 1 et 2, d'autres modes de réalisation de l'invention;

- la figure 11 est une vue schématique, en demi-coupe axiale, d'une variante de réalisation de l'invention;

- la figure 12 est une vue du presse-étoupe de la figure 11 en présentant les différents éléments séparément;

- la figure 13 est une vue schématique, en demi-coupe axiale, de la pince de fixation du presse-étoupe des figures 11 et 12 avant vissage du corps du presse étoupe;

     - la figure 14 est une vue schématique, en demi-coupe axiale, d'une variante de la bague du presse-étoupe des figures 11 à 13; et

     - les figures 14a et 14b sont des vues, également en demi-coupe axiale, d'accessoires pouvant se fixer sur la bague de la figure 14.

     Sur ces dessins, les mêmes éléments sont désignés par les mêmes références numériques éventuellement affectées d'un indice alphabétique.

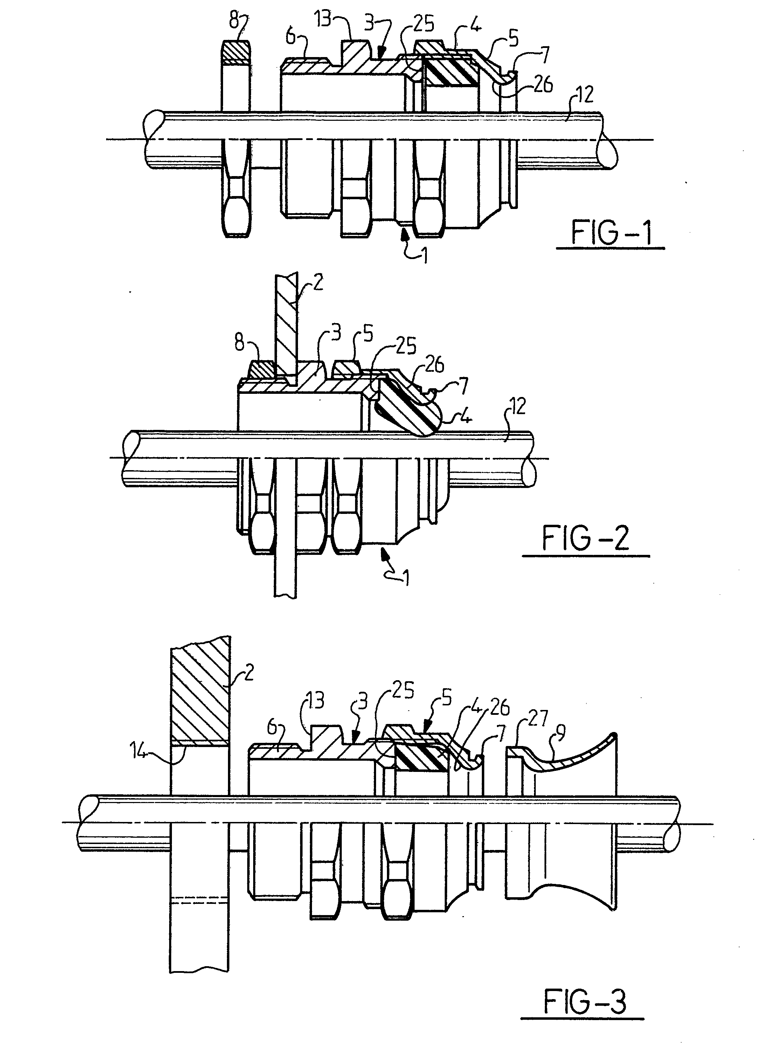

     Le presse-étoupe représenté sur les figures 1 et 2 comprend un corps 3 tubulaire dont l'extrémité appelée à traverser la paroi présente un filetage 6, et dont l'autre extrémité présente un épaulement terminal interne 25 sur lequel une garniture 4 vient prendre appui. Cette garniture a la forme d'une bague à pourtour biconique, cependant que son alésage interne est cylindrique.

     La garniture 4 est comprimée contre l'épaulement 25 par un écrou 5 présentant un prolongement tronconique semi-torique 26.

     Cette disposition permet un fluage de la garniture 4 en direction de la canalisation 12 avec, éventuellement, un débordement à l'extérieur (figure 2) ce qui autorise un serrage dans une grande gamme de diamètres.

     Pour cela, la garniture peut être avantageusement réalisée en caoutchouc naturel, en polyuréthane ou en néoprène, plus particulièrement de dureté 75 Shore A $\pm$ 5.

     On peut ainsi réaliser des presse-étoupe autorisant une gamme de serrage de 3;5 à 7,5 mm de diamètre, ainsi que de 7,5 à 12,5 mm, 11,5 à 19 mm, 18 à 30 mm et 28 à 42,5 mm de diamètre, ce qui permet de couvrir la gamme de canalisations de 3,5 à 42,5 mm de diamètre avec seulement cinq corps standard de presse-étoupe.

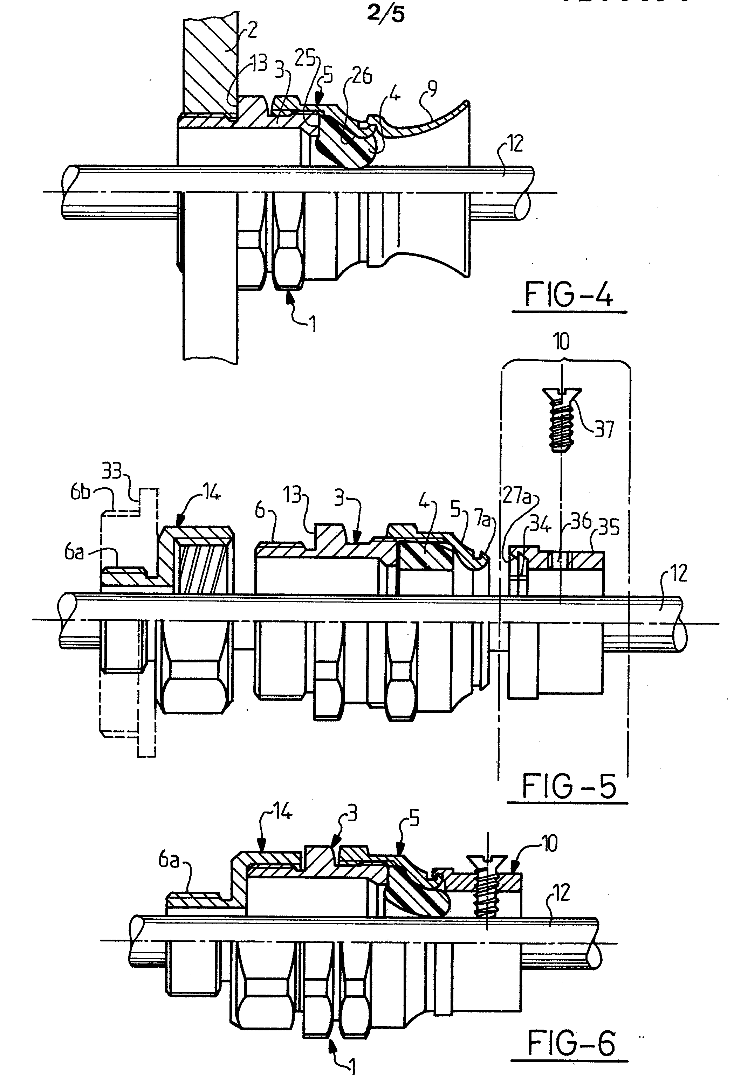

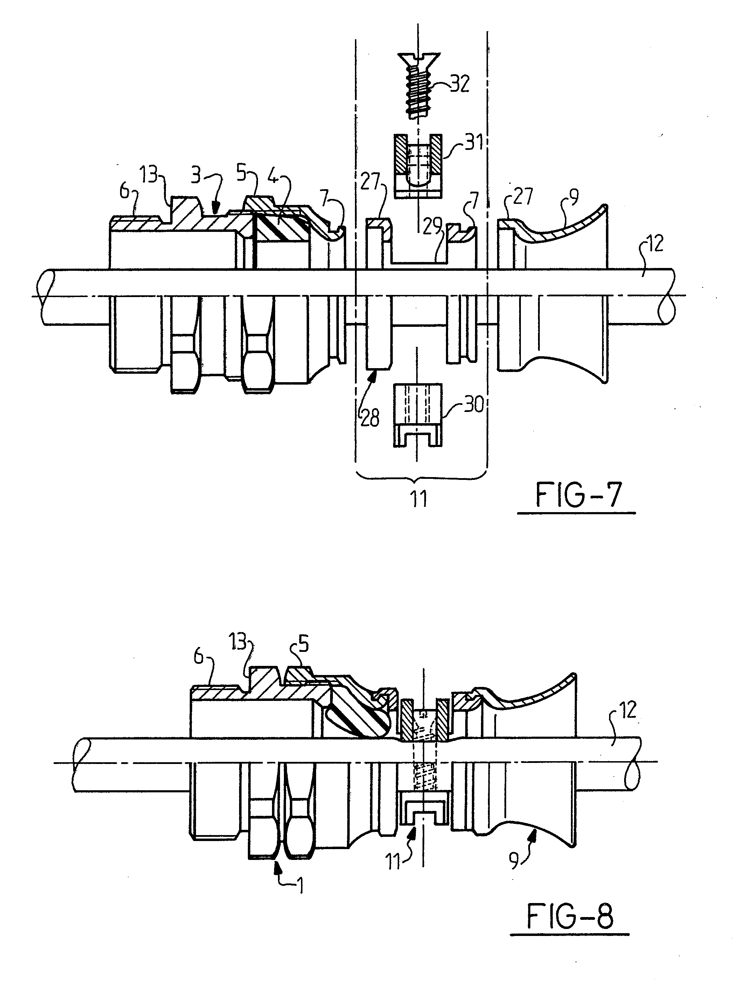

L'extrémité de l'écrou est terminée extérieurement par un becquet extérieur 7 destiné au sertissage éventuel d'organes complémentaires tels un embout évasé en tulipe 9 (figures 3, 4) qui permet d'éviter des déformations nuisibles de la canalisation 12, en limitant son débordement de façon progressive à la sortie des presse-étoupe, ou encore un module d'ancrage 11 (figures 7 et 8) constitué par une bague 28 présentant à l'une de ses extrémités une jupe de sertissage 27, et dans sa partie médiane une saignée 29 permettant le serrage d'un collier 30, 31 à vis 32 du type couramment utilisé en plomberie pour assurer un maintien plus positif de la canalisation 12.

La bague 28 peut présenter à son extrémité opposée à la jupe 27 un becquet 7 permettant, à son tour, le sertissage d'un autre organe complémentaire tel qu'une tulipe 9 (figures 7 et 8).

Le filetage 6 est limité par un épaulement 13 et permet des applications diverses. Le corps 3 peut être vissé directement dans un filetage 14 d'une paroi 2 (figures 3 et 4). Il peut également recevoir un écrou 8 que l'on vient visser de l'autre côté de la paroi 2 après introduction du corps 3 dans un trou lisse de la paroi (figures 1 et 2).

Il peut également recevoir un réducteur de diamètre de filetage tel que 14 (figures 5 et 6) qui est constitué par une bague épaulée comportant un taraudage vissant sur le filetage 6 du corps 3, et un filetage 6a de diamètre inférieur au filetage 6 du corps 3.

Ainsi, avec un tel réducteur, on peut utiliser un même presse-étoupe pour des canalisations 12 de diamètre bien plus petit, du fait de la grande adaptabilité de la garniture 4. Ceci permet la fixation d'un presse-étoupe dans des trous de paroi de diamètres différents.

En variante, la bague 14 peut comporter un filetage 6b d'un plus grand diamètre terminé par un épaulement 33, comme indiqué en pointillé sur la figure 5.

Sur les figures 5 et 6 est représentée une variante 7a, 27a de fixation d'un module d'ancrage 10 par encliquetage d'une nervure de section tronconique 27a dans une rainure à bord conique 7a de l'écrou 5.

La nervure 27a est découpée en tronçons par des fentes 34 assurant une élasticité suffisante pour l'encliquetage d'une douille 35 présentant un, ou de préférence, trois taraudages à 120° 36, dans lesquels viennent visser des vis pointeau 37 assurant un ancrage positif d'une canalisation 12.

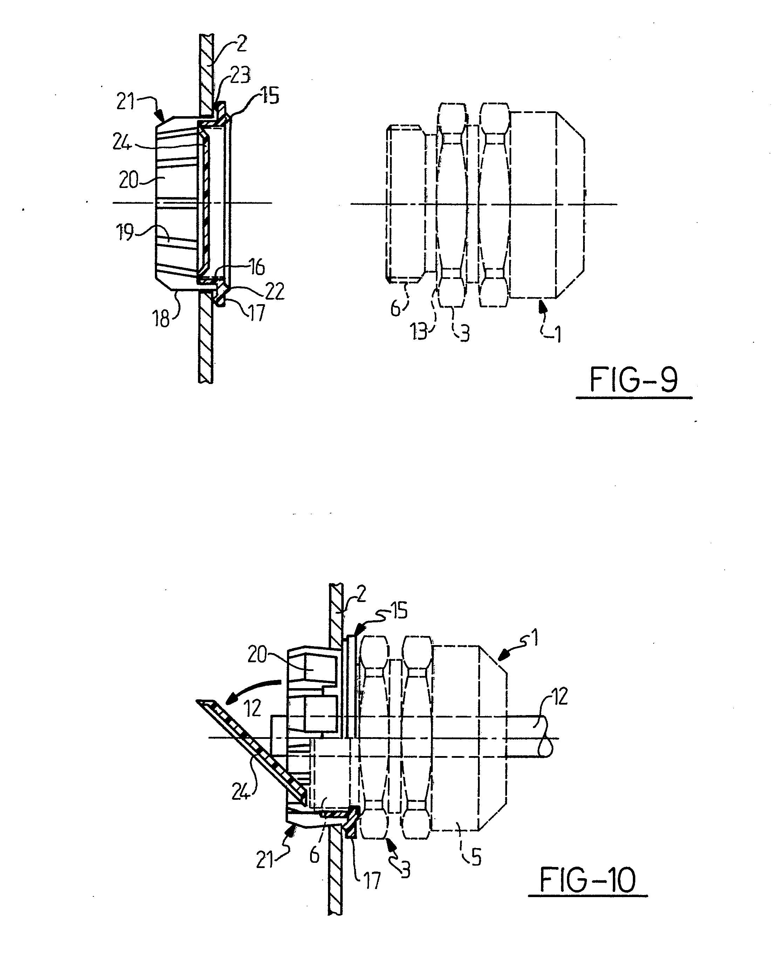

L'extrémité filetée 6 du corps 3 peut également recevoir une douille 15 de fixation à travers un orifice d'une paroi accessible d'un seul côté, comme représenté sur les figures 9 et 10.

La douille 15 est essentiellement constituée par une bague 16 taraudée dont un côté est terminé par une collerette 17 présentant, sur chacune de ses faces, des nervures annulaires coaxiales 22, 23 qui assurent l'étanchéité, respectivement contre l'épaulement 13 du corps 3 du presse-étoupe, et contre la paroi 2.

La bague taraudée 16 est prolongée, dans sa partie appelée à traverser la paroi 2, par une pince 21 formée par une pluralité de doigts radiaux 20 délimités par des fentes longitudinales 19. La surface extérieure de la pince 21 est biconique, ce qui permet son insertion aisée à travers l'orifice de la paroi par compression radiale, et son ancrage derrière la paroi lorsque le filetage 6 du corps 3 est vissé à fond, par épanouissement des doigts 20, du fait de la surface tronconique interne des doigts 20.

La douille 15 comporte en outre un opercule frangible 24 en bout du taraudage de la bague 16, qui s'en détache comme indiqué figure 10 lorsque le corps 6 est vissé à fond dans la douille 15.

L'utilisateur peut, à volonté, disposer une telle douille 15 en attente dans un orifice de paroi dont elle assure l'étanchéité jusqu'à mise en place d'un presse-étoupe 1.

Au contraire, on peut équiper un presse-étoupe 1 d'une telle douille 15 sans la fixer à fond afin de conserver l'opercule 24 qui met, de ce fait, le presse-étoupe 1 à l'abri des poussières.

Suivant les modes de réalisation, il peut être possible de mettre en place, en attente d'utilisation, une douille 15 dans un orifice de paroi avec un presse-étoupe 1 non vissé à fond, ce qui permet à l'opercule de remplir son rôle d'étanchéité jusqu'au moment de la mise en place d'une canalisation 12 qui entraînera le vissage à fond du corps 1.

Une telle douille peut être notamment moulée en polyuréthane, et peut être utilisée pour la fixation dans des tôles d'épaisseurs variables, par exemple de 0,5 à 3 mm au moins, en assurant, après épanouissement dû au vissage du corps du presse-étoupe, un ancrage très efficace dépassant couramment une force de traction de 500 N pour des canalisations de 7,5 à 12,5 mm de diamètre.

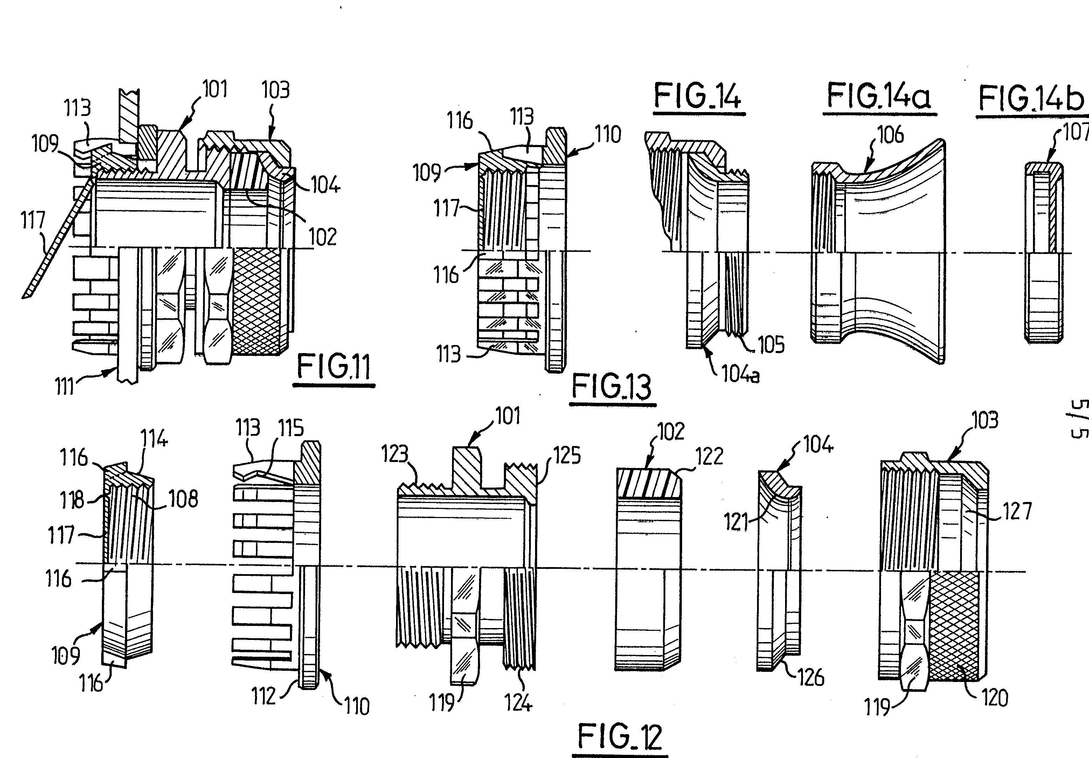

Le presse-étoupe représenté sur la variante des figures 11 à 13 comprend essentiellement un corps tubulaire 101, une garniture d'étanchéité 102, une bague 104 et un chapeau 103. Le corps 101 présente, à son extrémité appelé à être fixée dans la cloison à traverser, un filetage 123 et à son extrémité opposée un second filetage 124 dans lequel vient visser le chapeau 103. Le corps 101 présente une surface de préhension six pans 119 pour une clé de serrage par vissage, tandis que le chapeau 103 présente également un six pans 119 et en plus un molletage 120 qui permet un vissage rapide à la main avant blocage avec une clé.

Le filetage 124 du corps 101 présente, en direction du chapeau 103, une face d'appui plane 125, sur laquelle vient porter la tranche d'une garniture d'étanchéité 122 dont l'extérieur, en direction du chapeau 103, présente un chanfrein 122. Sur ce chanfrein 122 vient porter la face épanouie intérieure 121 de la bague 104 dont la partie correspondante extérieure conique vient s'appliquer contre une partie conique correspondante 127 du chapeau 103.

L'extrémité filetée 123 du corps 101 peut être utilisée directement pour la fixation du presse-étoupe dans un trou taraudé, ou encore dans un trou lisse avec blocage classique par un écrou sur l'autre face de la paroi.

Le filetage 123 peut également venir visser dans le taraudage 108 d'une bague de serrage 109 dont la face extérieure convexe 114 est biconique et vient se loger normalement dans une surface correspondante 115 de dents 113 issues d'une collerette 112 permettant de limiter l'insertion d'une pince annulaire 110 dans un trou lisse d'une cloison 111.

La bague 109 comporte avantageusement une partie frangible 117 constituant une membrane d'obturation axiale temporaire raccordée à la bague 109 par une zone annulaire de moindre résistance 118. Des ergots 116 faisant saillie à la périphérie de la bague 109 viennent s'insérer entre deux dents 113 de la pince 110. Ainsi, la bague 109 est calée en rotation, mais peut coulisser axialement par rapport à la pince 110. Lorsqu'on visse le corps 101 dans la bague 109 à l'intérieur de la pince 110 préalablement insérée élastiquement dans un perçage de la cloison 111, le filetage 123 pénètre dans le taraudage 108 librement, jusqu'à ce que le six pans 119 vienne en appui contre la collerette 112. Si l'on continue de visser, la bague 109 coulisse axialement dans la pince 110 en écartant les dents 113 jusqu'à ce que l'extrémité du corps 101 vienne porter contre la membrane 117 et provoque la rupture de la zone frangible 118 avec expulsion de la membrane 117. Après blocage à l'outil à l'aide du six pans 119, le corps 101 est solidement fixé dans la pince 110 qui est elle-même très solidement fixée dans la paroi 111 par l'écartement des dents 113 sous l'effet du coulissement de la bague 109.

Les ergots 116 de la bague 109 empêchent toute rotation intempestive de la bague dans le corps 110 lors du serrage.

Il est possible de mettre en place, en attente, une pince 110 dans un orifice d'une paroi 111, la membrane 117 assurant la mise à l'abri des poussières sinon une certaine étanchéité. Au moment de l'utilisation, on peut visser directement le corps 101 dans la bague 109, ou retirer préalablement la membrane 117 en la repoussant à la main ou avec un outil quelconque avant le vissage du corps 101.

Si on le désire, on peut retirer préalablement la pince 110 de la cloison 111 pour faire cette opération afin d'éviter que la membrane 117 ne tombe de l'autre côté de la cloison 111.

Lorsqu'on visse le chapeau 103 sur le corps 101, sa partie conique 127 porte librement en rotation contre la partie conique correspondante 126 de la bague 104. La bague 104 comprime la garniture 102, à la fois axialement et radialement du fait de l'appui de sa partie épanouie 121 contre la partie chanfreinée 122 de la garniture 102. Le frottement entre la bague 104 et le chapeau 103 est normalement inférieur au frottement entre la bague 104 et la garniture 102 du fait de la nature élastique de la garniture 102. Cette caractéristique peut être améliorée encore par un choix particulier des matériaux constituant la bague 104 et le chapeau 103.

On peut notamment réaliser la bague 104 en matière plastique, la garniture 102 en élastomère et le chapeau 103 en laiton ou matière plastique rigide.

De même, la pince 110 peut être réalisée en polyuréthane ou autre matière plastique assez souple pour obtenir une bonne étanchéité par contact avec la paroi 111 et le six pans 119, ainsi qu'une déformation des dents 113 sans risque de rupture.

La bague de serrage 109 peut être réalisée en polyamide 6/6 ou en matière plastique assez dure pour permettre un vissage sans déformation des filets du taraudage.

Lorsqu'on désire adapter des accessoires en amont du presse-étoupe tel qu'un embout facilitant l'introduction du câble et limitant les efforts de flexion à l'entrée du presse-étoupe, tel l'embout "trompette" 106 de la figure 14a, on remplace la bague 104 des figures 10 à 13 par une bague analogue 104a prolongée par un filetage 105 supportant le chapeau 103, comme représenté sur la figure 14.

Sur ce filetage 105, on peut visser divers accessoires autres que l'embout 106 (figure 14a), ou encore encliqueter élastiquement un chapeau 107 (figure 14b).

Ceci permet de mettre en place, en attente, un presse-étoupe dans une paroi en protégeant le filetage 105 de la bague 104a jusqu'au moment de la mise en place d'une canalisation à travers le corps 101. La conformation particulière de l'épanouissement 121 de la bague 104 ou 104a, coopérant avec le chanfrein 122 de la bague d'étanchéité 102, provoque, lors du vissage du chapeau 103, une déformation centripète de la bague 102 particulièrement importante qui permet l'utilisation du presse-étoupe avec des canalisations de diamètres différents, dans une gamme relativement large.

Cet avantage particulier permet de couvrir la gamme des câbles électriques courants avec seulement la moitié des types de presse-étoupe par rapport à ceux utilisés jusqu'ici.

REVENDICATIONS

1. Presse-étoupe modulaire (1) pour maintenir et assurer l'étanchéité autour d'une canalisation électrique (12), d'un tube, d'un câble, d'une tige ou analogue, à la traversée d'une paroi (2), qui comprend un corps tubulaire (3) renfermant une garniture compressible (4) pressée par un organe annulaire de compression (5), caractérisé en ce que le corps (3) présente des moyens d'assujettisement (6, 7) à une pluralité d'organes complémentaires interchangeables (8, 9, 10, 11, 15) pour le maintien du presse-étoupe (1) sur la paroi (2), et/ou le maintien de la canalisation (12).

2. Presse-étoupe, suivant la revendication 1, dans lequel l'organe annulaire de compression de la garniture (4) est constitué par un écrou annulaire (5) vissant sur l'extrémité du corps (3) opposée aux moyens d'assujettissement (6) à la paroi (2) pour comprimer une garniture (4) contre un épaulement interne (25) du corps (3), caractérisé en ce que l'écrou (5) présente à son extrémité opposée au corps (3) des moyens d'assujettissement (7) par vissage (14), encliquetage (7a), sertissage (7) ou soudure, à des organes complémentaires interchangeables de serrage (11), d'ancrage (10), ou de guidage (9) d'une canalisation (12) à travers le presse-étoupe (1).

3. Presse-étoupe, suivant la revendication 2, caractérisé en ce qu'au moins un des organes complémentaires interchangeables (11) comporte des moyens d'assujettissement (7), à au moins un autre organe (9) complémentaire interchangeable.

4. Presse-étoupe, suivant l'une des revendications 2 et 3, caractérisé en ce que l'écrou (5) est prolongé par un rétrécissement tronconique galbé (26) semi-torique, contre lequel est pressée une garniture (4) en butée sur un épaulement (25) de l'extrémité du corps (3), ainsi soumise à un fluage centripète assurant son serrage sur des canalisations (12) d'une large gamme de diamètres.

5. Presse-étoupe suivant la revendication 1, caractérisé en ce que la garniture d'étanchéité (102) est logée dans l'organe de compression constitué par un chapeau (103) vissant sur le corps, et prend appui, d'une part sur la tranche d'extrémité du corps (101) et, d'autre part, sur une bague (104) solidaire axialement du chapeau, mais libre en rotation.

6. Presse-étoupe, suivant la revendication 5, caractérisé en ce que l'alésage (121) de la bague (104) s'épanouit en direction de la garniture 102) qui présente un chanfrein (122) périphérique extérieur en regard du bord épanoui de la bague.

7. Presse-étoupe, suivant l'une des revendications 5 et 6, caractérisé en ce que la bague (104a) est prolongée par un filetage annulaire (105) faisant saillie axialement à travers le chapeau (103), pour la fixation d'un organe auxiliaire (106) de maintien radial et de guidage de la canalisation, ou d'un opercule axial temporaire (107), protecteur du filetage (105).

8. Presse-étoupe, suivant l'une des revendications 5 à 7, caractérisé en ce que le filetage (123) du corps (101) coopère avec un taraudage (108) d'une bague de serrage (109) libre axialement mais calée en rotation à l'intérieur d'une pince annulaire (110) élastique multibranches, insérable dans un orifice circulaire de la paroi (111) avec un faible jeu, et comportant des moyens d'appui (112) sur la paroi du côté du presse-étoupe, le vissage du corps (101) dans la bague de serrage (109) attirant la bague vers le corps en écartant les branches (113) de la pince de l'autre côté de la paroi.

9. Presse-étoupe suivant la revendication 8, caractérisé en ce que la bague de serrage (109), intérieurement taraudée (108), présente extérieurement une convexité (114) cylindrique complémentaire d'une concavité (115) intérieure des branches (113) de la pince (110), avec au moins un ergot (116) faisant saillie radialement entre deux branches de la pince.

10. Presse étoupe suivant l'une des revendications 1 à 7, caractérisé en ce qu'il comporte une douille (15) pour sa fixation à travers un orifice d'une paroi (2) accessible d'un seul côté, douille constituée par une bague (16) annulaire taraudée, limitée d'un côté par une collerette (17) annulaire de butée sur la face accessible de la paroi (2), et prolongée à l'opposé par une partie extérieurement biconique (18) renflée dans sa partie médiane traversant la paroi, et découpée par plusieurs fentes longitudinales (19) en une pluralité de doigts radiaux (20) formant une pince (21) compressible lors de l'insertion de la pince à travers la paroi, et expansible lors du vissage du filetage du corps du presse-étoupe dans le taraudage de la bague.

11. Presse-étoupe, suivant la revendication 10, caractérisé en ce que la douille (15) est moulée d'une seule pièce en matière plastique non rigide, au moins une des faces latérales de la collerette (17) présentant au moins une nervure (22, 23) annulaire coaxiale d'étanchéité compressible contre la paroi (2), ou l'épaulement annulaire (13) de butée du corps (3) du presse-étoupe, réciproquement.

12. Presse-étoupe, suivant l'une des revendications 8 à 11, caractérisé en ce que la bague de serrage (109, 15) comporte une membrane (117, 24) d'obturation axiale temporaire à laquelle elle est raccordée par une zone circulaire frangible (118).

13. Presse-étoupe, suivant la revendication 12, caractérisé en ce que le corps (101, 3) est vissé partiellement, sans détachement de l'opercule (117, 24), jusqu'à sa mise en place à travers une paroi (111, 2).

14. Presse-étoupe, suivant l'une des revendications 1 à 13, caractérisé en ce que le corps 101 et l'organe annulaire de compression (103) présentent extérieurement des moyens de préhension (119) par un outil de blocage par vissage, et le chapeau présente extérieurement, en plus, des moyens de préhension manuelle (120) pour un vissage rapide préliminaire au blocage.

0206896

FIG-1

FIG-2

FIG-3

0206896

FIG-4

FIG-5

FIG-6

FIG-7

FIG-8

0206896

FIG-9

FIG-10

FIG.11

FIG.12

FIG.13

FIG.14

FIG.14a

FIG.14b

5/5

0206896

**0206896**
Numéro de la demande

## RAPPORT DE RECHERCHE EUROPEENNE

Office européen
des brevets

EP 86 40 1222

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 083 612 (ENFIELD ROLLINGMILLS LTD.) * Figures; page 1, lignes 50-72 * | 1 | H 02 G 3/06 F 16 L 5/02 |
| A | | 2,3 | |
| A | FR-A-2 415 735 (KITAGAWA INDUSTRIES CO. LTD.) * Figures; revendication 1 * | 1,4 | |
| A | GB-A- 908 838 (BRITISH ENGINES LTD.) * Figures; page 1, ligne 74 - page 2, ligne 54 * | 1,5-7 | |
| A | FR-A-1 287 517 (P. WELU) * Figures 2,3; résumé * | 1,5,7 | DOMAINES TECHNIQUES RECHERCHES (Int. Cl.4) |
| A | FR-A-2 269 226 (L.P. SCHMITT) * Figures 1,2,6; page 3, ligne 1 - page 4, ligne 25 * | 10-14 | H 02 G F 16 L H 01 B |

Le présent rapport de recherche a été établi pour toutes les revendications

| Lieu de la recherche | Date d'achèvement de la recherche | Examinateur |
|---|---|---|
| LA HAYE | 26-08-1986 | NARMINIO A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82